# EUROPEAN PATENT APPLICATION

(11) **EP 3 413 645 A1**
(43) Date of publication of application: **12.12.2018**
(21) Application number: 17747579.5
(22) Date of filing: 03.02.2017
(51) Int. Cl.: H04W 72/02, H04W 52/02, H04W 92/18

(54) **USER EQUIPMENT AND RECEIVING METHOD**

(30) Priority: 04.02.2016 JP 2016020328
(71) Applicant: NTT DOCOMO, INC., Chiyoda-ku Tokyo 100-6150 (JP)
(72) Inventor: YASUKAWA, Shimpei, Tokyo 100-6150 (JP); NAGATA, Satoshi, Tokyo 100-6150 (JP); ZHAO, Qun, Beijing 100190 (CN)
(74) Representative: Hoffmann Eitle
(86) International application number: PCT/JP2017/004037
(87) International publication number: WO 2017/135428

(57) **Abstract**

A user equipment in a wireless communication system in which communication is performed between a base station and a user equipment includes: a first reception unit that receives information on communication performed in each of a plurality of carriers from the base station; a selection unit that selects a carrier in which the user equipment has to receive signals among the plurality of carriers based on the information on communication performed in each of the plurality of carriers; and a second reception unit that receives predetermined communication in the carrier selected by the selection unit.

## Description

### TECHNICAL FIELD

The present invention relates to a user equipment and a reception method.

### BACKGROUND ART

In LTE (Long Term Evolution) or LTE successor systems (for example, also referred to as LTE-A (LTE Advanced), 4G, FRA (Future Radio Access), or the like), a D2D (Device to Device) technique for allowing user equipments to perform direct communication without via a radio base station has been discussed (see, Non-Patent Document 1).

D2D reduces the traffic between user equipments and a base station and enables communication to be performed between user equipments even when the base station falls into an incommunicable state in the event of a disaster or the like.

D2D is broadly classified into D2D discovery for discovering another communicable user equipment and D2D communication (also referred to as D2D direct communication or terminal-to-terminal direct communication) for allowing direct communication to be performed between user equipments. In the following description, D2D communication and D2D discovery are simply referred to as D2D when both are not particularly distinguished from each other. Moreover, signals transmitted and received by D2D are referred to as D2D signals.

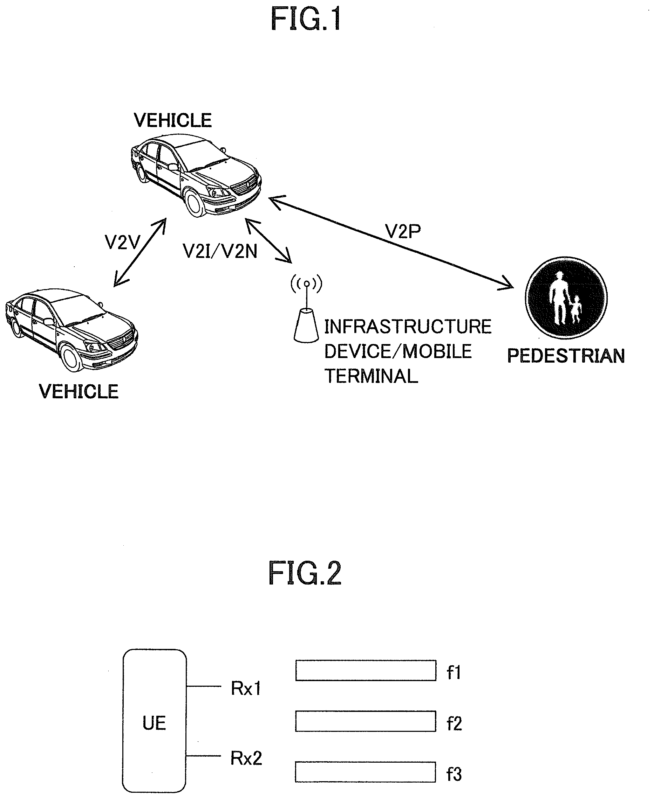

In 3GPP (3rd Generation Partnership Project), it is discussed to realize V2X by expanding the D2D function. Here, V2X is a part of ITS (Intelligent Transport Systems), and as illustrated in Fig. 1, is a generic term of V2V (Vehicle to Vehicle) meaning a form of communication performed between vehicles, V2I (Vehicle to Infrastructure) meaning a form of communication performed between a vehicle and a RSU (Road-Side Unit) provided on the roadside, V2N (Vehicle to Nomadic device) meaning a form of communication performed between a vehicle and a mobile terminal of a driver, and V2P (Vehicle to Pedestrian) meaning a form of communication performed between a vehicle and a mobile terminal of a pedestrian.

### CITATION LIST

### NON-PATENT DOCUMENT

Non-Patent Document 1: "Key drivers for LTE success: Services Evolution", September 2011, 3GPP, Internet URL: http://www.3gpp.org/ftp/Information/presentations/presentat ions_2011/2011_09 _LTE_Asia/2011_LTE-Asia_3GPP_Service_evolution.pdf
Non-Patent Document 2: 3GPP TS 36.300 V13.2.0 (2015-12)

### SUMMARY OF THE INVENTION

### PROBLEM TO BE SOLVED BY THE INVENTION

Currently, V2X has discussed various services. For example, a service in which, when a present speed is notified from an on-vehicle terminal to a RSU provided at an intersection, a speed at which a vehicle can pass without stopping at a traffic signal has been discussed. Moreover, a service called ETC 2.0 that notifies real-time road information (wide-area congestion information, required time in each segment, or the like) to an on-vehicle device has been provided. This service can be said to be one of services provided by V2X.

When such various services are to be implemented by D2D communication, since it is difficult to accommodate D2D communications corresponding to all services in one carrier (a frequency band), it is expected in the future that V2X is provided by allocating a plurality of carriers dedicated for V2X.

In general, a user equipment having the capability to receive a plurality of carriers simultaneously is expensive. Therefore, it is expected that all user equipments used in V2X do not always have the capability to receive all carriers simultaneously. For example, as illustrated in Fig. 2, even though V2X is provided using three carriers, a user equipment may have the capability to receive only two carriers simultaneously.

Moreover, depending on a user, it cannot be said that the user does not want to use all services provided by V2X. For example, it is expected that many users may want to receive only a limited service using a low-cost user equipment (an on-vehicle device).

However, in the current D2D, since a technique capable of appropriately converting carriers to be used for communication is not provided, it is difficult to solve the above-described problems. Moreover, the same problems may occur during transmission as well as reception.

The disclosed technique has been in view of the above-described circumstance, and an object thereof is to provide a technique capable of appropriately converting carriers that a user equipment uses for communication.

### MEANS FOR SOLVING PROBLEM

A user equipment of the disclosed technique is a user equipment in a wireless communication system in which communication is performed between a base station and a user equipment, comprising: a first reception unit that receives information on communication performed in each of a plurality of carriers from the base station; a selection unit that selects a carrier in which the user equipment has to receive signals among the plurality of carriers based on the information on communication performed in each of the plurality of carriers; and a second reception unit that receives predetermined communication in the carrier selected by the selection unit.

### EFFECT OF THE INVENTION

According to the disclosed technique, a technique capable of appropriately converting carriers that a user equipment uses for communication is provided.

### BRIEF DESCRIPTION OF DRAWINGS

Fig. 1 is a diagram for describing V2X;
Fig. 2 is a diagram for describing problems;
Figs. 3(a) and 3(b) are diagrams for describing D2D;
Fig. 4 is a diagram for describing a MAC PDU used in D2D communication;
Fig. 5 is a diagram for describing the format of a SL-SCH subheader;
Fig. 6 is a diagram for describing an example of a channel structure used in D2D;
Figs. 7(a) and 7(b) are diagrams illustrating a structure example of PSDCH;
Figs. 8(a) and 8(b) are diagrams illustrating a structure example of PSCCH and PSSCH;
Figs. 9(a) and 9(b) are diagrams illustrating a resource pool configuration;
Fig. 10 is a diagram illustrating a configuration example of a wireless communication system according to respective embodiments;
Fig. 11 is a sequence diagram illustrating an example of a processing procedure related to conversion of carriers according to a first embodiment;
Fig. 12 is a diagram illustrating an example of D2D communication information;
Fig. 13 is a sequence diagram illustrating a first example of a processing procedure that a base station collects information on D2D communication;
Fig. 14 is a sequence diagram illustrating a second example of a processing procedure that a base station collects information on D2D communication;
Fig. 15 is a sequence diagram illustrating a modification of a processing procedure related to conversion of carriers according to the first embodiment;
Figs. 16(a) and 16(b) are diagrams illustrating a case in which DRX is set in a D2D carrier;
Fig. 17 is a diagram illustrating a case in which a gap period is set in a D2D carrier;
Fig. 18 is a diagram illustrating a case in which DRX is set in a cellular carrier;
Fig. 19 is a diagram illustrating a case in which a gap period is set in a cellular carrier;
Figs. 20(a) and 20(b) are diagrams illustrating an operation example which uses a second embodiment;
Fig. 21 is a diagram illustrating an example of a functional configuration of a user equipment according to respective embodiments;
Fig. 22 is a diagram illustrating an example of a functional configuration of a base station according to respective embodiments;
Fig. 23 is a diagram illustrating an example of a hardware configuration of a user equipment according to respective embodiments; and
Fig. 24 is a diagram illustrating an example of a hardware configuration of a base station according to respective embodiments.

### MODE(S) FOR CARRYING OUT THE INVENTION

Hereinafter, an embodiment of the invention will be described with reference to the drawings. The embodiment to be described below is an example only, and an embodiment to which the invention is applied is not limited to the following embodiment. For example, although a wireless communication system according to the present embodiment is a system of a scheme compatible with LTE, the invention is not limited to LTE but can be applied to other schemes. In the present specification and the claims, "LTE" is used in a broad sense to include 5G communication schemes corresponding to 3GPP release 10, 11, 12, 13, 14, or later as well as communication schemes corresponding to 3GPP release 8 or 9.

Although the present embodiment is mainly directed to V2X, the technique according to the present embodiment is not limited to V2X but can be broadly applied to general D2D. Moreover, "D2D" is meant to include V2X.

"D2D" is used in a broad sense to include a processing procedure in which a D2D signal is transmitted and received between user equipments UEs, a processing procedure in which a base station receives (monitors) D2D signals, and a processing procedure in which a user equipment UE transmits an uplink signal to a base station eNB in a RRC idle state or a state in which connection with a base station eNB is not established.

Although the embodiments to be described below are described assuming that the embodiments are applied to a wireless communication system that includes cellular communication carriers and D2D carriers, the present invention is not limited to this. For example, the embodiments to be described below can be applied to a wireless communication system that includes cellular communication carriers only.

### <Overview of D2D>

An overview of D2D defined in LTE will be described. V2X can also use the technique of D2D described herein, and a UE of the embodiment of the present invention can transmit and receive a D2D signal according to the technique.

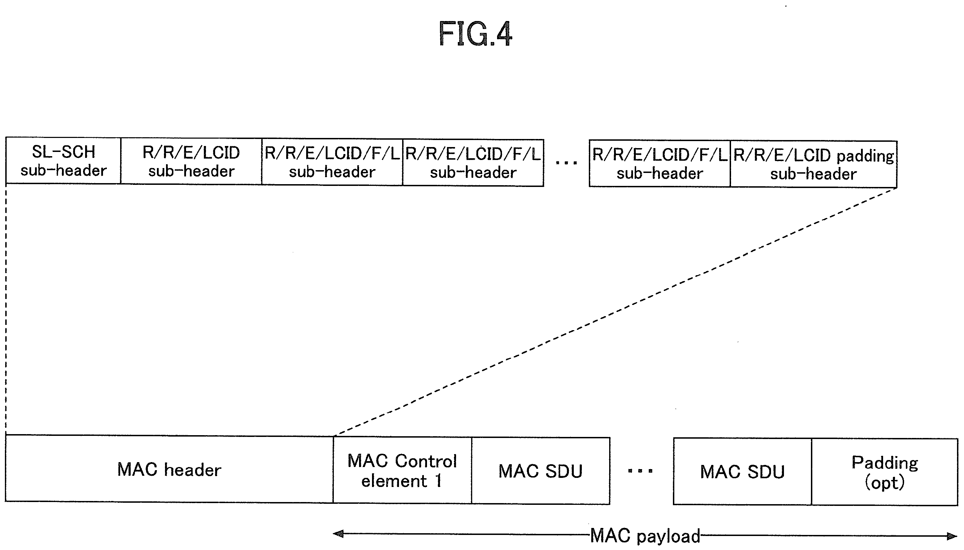

As described above, D2D is broadly classified into "D2D discovery" and "D2D communication". As illustrated in Fig. 4(a), in "D2D discovery," a resource pool for discovery messages is secured for each discovery period and a UE transmits a discovery message in the resource pool. More specifically, the "D2D discovery" comes in Type 1 and Type 2b. In Type 1, a UE autonomously selects a transmission resource from a resource pool. In Type 2b, a semistatic resource is allocated by higher-layer signaling (for example, a RRC signal).

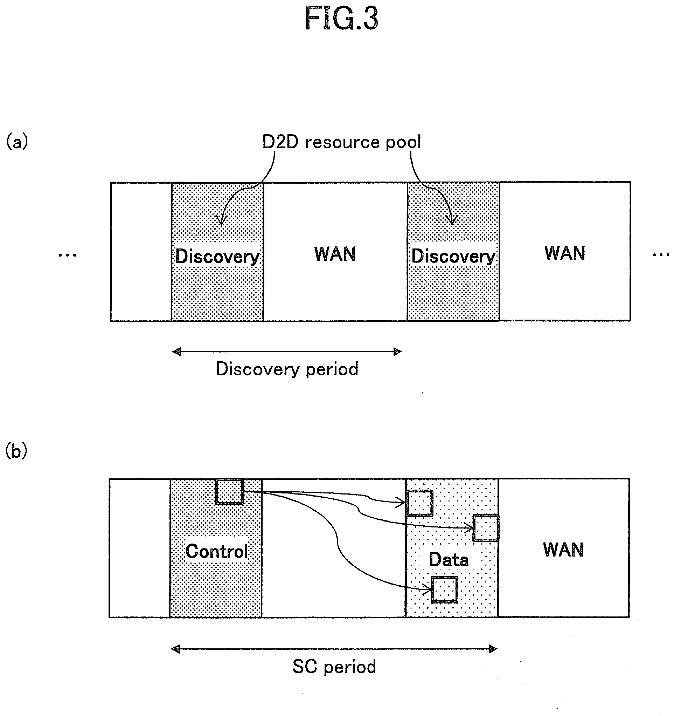

In "D2D communication," SCI/data transmission resource pools are cyclically secured as illustrated in Fig. 3(b). A transmission-side UE notifies a data transmission resource or the like to the reception side using SCI with the aid of a resource selected from a control resource pool (a SCI transmission resource pool) and transmits data with the aid of the data transmission resource. More specifically, the "D2D communication" comes in Mode 1 and Mode 2. In Mode 1, resources are dynamically allocated by (E)PDCCH transmitted from an eNB to a UE. In Mode 2, a UE autonomously selects a transmission resource from a resource pool. A resource pool notified using SIB or a predetermined resource pool is used as the resource pool.

In LTE, a channel used in "D2D discovery" is referred to as PSDCH (Physical Sidelink Discovery Channel), a channel used for transmitting control information such as SCI in "D2D communication" is referred to as PSCCH (Physical Sidelink Control Channel), and a channel used for transmitting data is referred to as PSSCH (Physical Sidelink Shared Channel) (see Non-Patent Document 2).

A MAC (Medium Access Control) PDU (Protocol Data Unit) used in D2D communication includes at least a MAC header, a MAC control element, a MAC SDU (Service Data Unit), and padding as illustrated in Fig. 4. The MAC PDU may include other information. The MAC header includes one SL-SCH (Sidelink Shared Channel) subheader and one or more MAC PDU subheaders.

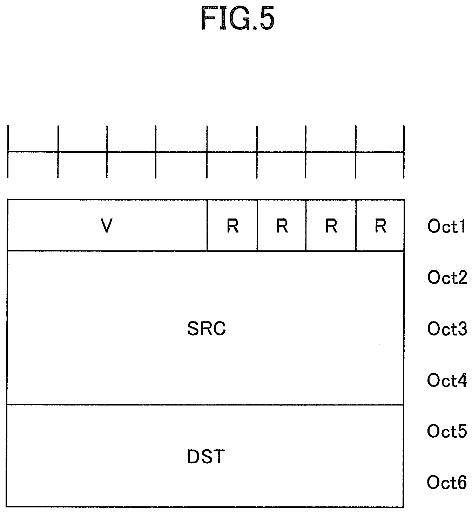

As illustrated in Fig. 5, the SL-SCH subheader includes a MAC PDU format version (V), transmission source information (SRC), transmission destination information (DST), a reserved bit (R), and the like. V is allocated to the start of the SL-SCH subheader and indicates a MAC PDU format version used by a UE. Information on a transmission source is set in the transmission source information. An identifier of a ProSe UE ID may be set in the transmission source information. Information on a transmission destination is set in the transmission destination information. Information on a ProSe Layer-2 Group ID of a transmission destination may be set in the transmission destination information.

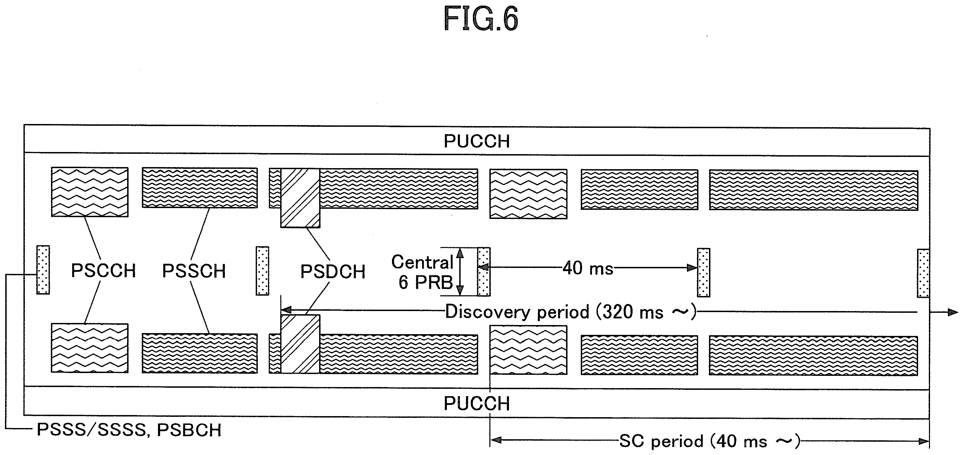

Fig. 6 illustrates an example of a channel structure of D2D. As illustrated in Fig. 6, a PSCCH resource pool and a PSSCH resource pool to be used for "D2D communication" are allocated. Moreover, a PSDCH resource pool to be used for "D2D discovery" is allocated at a period longer than the period of the channel of "D2D communication".

PSSS (Primary Sidelink Synchronization signal) and SSSS (Secondary Sidelink Synchronization signal) are used as a D2D synchronization signal. Moreover, PSBCH (Physical Sidelink Broadcast Channel) in which notification information (broadcast information) such as a system band of D2D, a frame number, or system configuration information, is transmitted is used for out-of-coverage operations, for example.

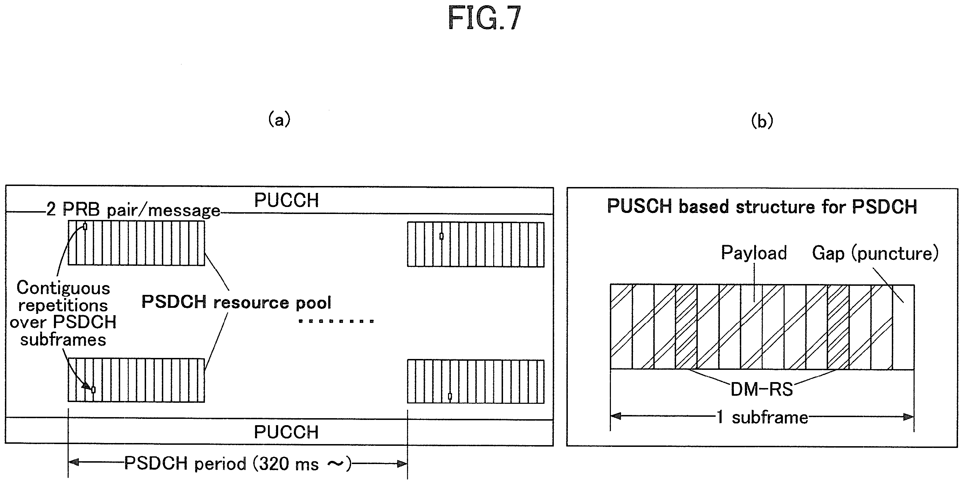

Fig. 7(a) illustrates an example of a PSDCH resource pool used for "D2D discovery". Since a resource pool is set by a bitmap of a subframe, the resource pool is represented by such an image as illustrated in Fig. 7(a). The same is true to the resource pool of the other channel. Moreover, PSDCH is repeatedly transmitted (repetition) using frequency hopping. The number of repetitions can be set to 0 to 4, for example. Moreover, as illustrated in Fig. 7(b), PSDCH has a PUSCH-based structure and has a structure in which a DM-RS (demodulation reference signal) is inserted.

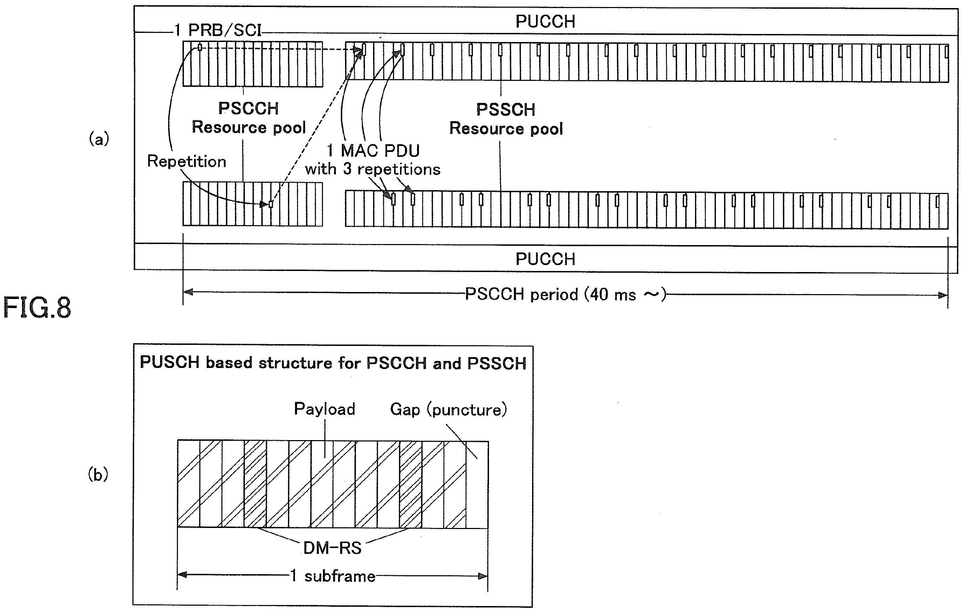

Fig. 8(a) illustrates an example of PSCCH and PSSCH resource pools to be used for "D2D communication". As illustrated in Fig. 8(a), PSCCH is repeatedly transmitted (repetition) one time using frequency hopping. PSSCH is repeatedly transmitted (repetition) three times using frequency hopping. As illustrated in Fig. 8(b), PSCCH and PSSCH have a PUSCH-based structure and has a structure in which DMRS is inserted.

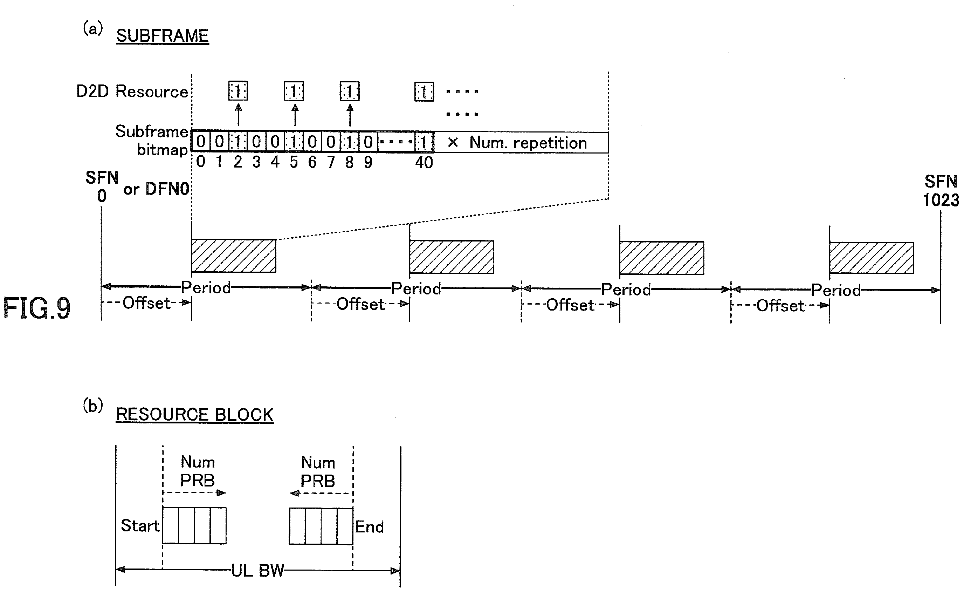

Figs. 9(a) and 9(b) illustrate an example of a resource pool configuration of PSCCH, PSDCH, and PSSCH (Mode 2). As illustrated in Fig. 9(a), a resource pool is represented as a subframe bitmap in the time direction. Moreover, the bitmap is repeated by the number of num.repetition. Moreover, an offset indicating the starting position of each period is designated.

In the frequency direction, continuous allocation (contiguous) and discontinuous allocation (non-contiguous) are possible. Fig. 9(b) illustrates an example of discontinuous allocation, and as illustrated in Fig. 9(b), starting PRB, ending PRB, and the number of PRBs (numPRB) are designated.

### <System configuration>

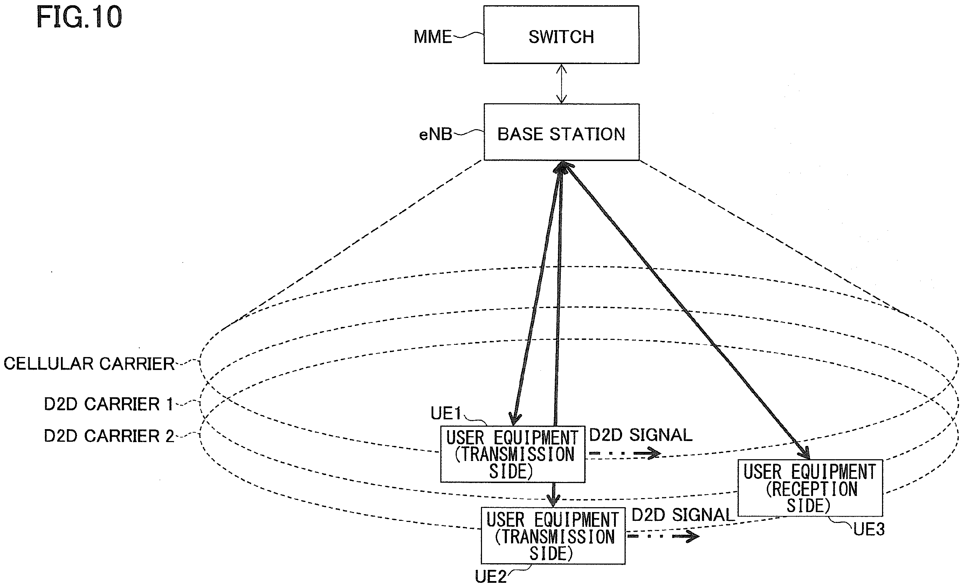

Fig. 10 is a diagram illustrating a configuration example of a wireless communication system according to respective embodiments. As illustrated in Fig. 10, the wireless communication system according to the present embodiment includes a switch MME, a base station eNB, and user equipments UE1 to UE3. In Fig. 10, although the user equipment UE1 and the user equipment UE2 are depicted as transmission-side user equipments UEs and the user equipment UE3 is depicted as a reception-side user equipment UE, the user equipments UE1 to UE3 have the same function. Hereinafter, the user equipments UE1 to UE3 will be referred to simply as a "user equipment UE" when both are not particularly distinguished from each other.

The user equipment UE has a cellular communication function and a D2D communication function. Moreover, the user equipment UE has a function of receiving (monitoring) a plurality of carriers. Although the user equipment UE may be an arbitrary device having the function of D2D, the user equipment UE is a terminal provided in a vehicle or held by a pedestrian, a RSU (a UE-type RSU having the function of a UE), or the like, for example.

The base station eNB has a cellular communication function of a base station eNB in LTE and functions (a resource allocation function, a configuration information notification function, and the like) for enabling communication of user equipments UEs in the present embodiment. The base station eNB may have a function of monitoring a D2D signal in addition to a cellular communication function. Moreover, the base station eNB includes a RSU (an eNB-type RSU having the function of an eNB) .

The switch MME is connected to the base station eNB to transmit and receive a predetermined signaling message (NAS (Non Access Stratum) message or the like) to and from the user equipment UE via the base station eNB.

The wireless communication system according to the present embodiment has one cellular communication carrier (hereinafter referred to as a "cellular carrier") and two D2D communication carriers (hereinafter referred to as "D2D carrier 1" and "D2D carrier 2"). "D2D carrier 1" and "D2D carrier 2" will be referred to simply as "D2D carrier" when both are not distinguished from each other. Although Fig. 10 illustrates one cellular carrier and two D2D carriers, the wireless communication system of the present embodiment may have two or more cellular carriers and three or more D2D carriers.

The cellular carrier and D2D carrier may be FDD (Frequency Division Duplex)-type carriers and may be TDD (Time Division Duplex)-type carriers. The carrier in the present embodiment is used in a broad sense to include a band or a cell and is not intended to mean a carrier frequency which is the central frequency in a band.

It is assumed that the user equipment UE according to the present embodiment includes a plurality of transceivers and has a function of allowing the plurality of transceivers to communicate simultaneously using a plurality of carriers. Moreover, it is assumed that the user equipment UE has a smaller number of transceivers than the number of carriers present in the wireless communication system. For example, although Fig. 10 illustrates the cellular carrier, D2D carrier 1, and D2D carrier 2, it is assumed that at least the reception-side user equipment UE3 includes only two transceivers and has a function of communicating simultaneously using two carriers only.

Hereinafter, a first embodiment and a second embodiment of a processing procedure performed by the wireless communication system according to the present embodiment will be described. In the following description, although an operation in which a reception-side user equipment UE selects a carrier to be used for receiving a D2D signal will be described mainly as an example, the reception-side user equipment UE may transmit the D2D signal using the selected carrier.

### <First embodiment>

### (Overview)

In the first embodiment, the reception-side user equipment UE3 operates to perform communication in a cellular carrier using one transceiver and select a number of carriers that the remaining transceivers can receive among a plurality of D2D carriers to perform communication. Moreover, the reception-side user equipment UE3 operates to acquire information (hereinafter referred to as "D2D communication information") on D2D communication performed by a plurality of D2D carriers via the cellular carrier and select a carrier in which communication is to be performed among the plurality of D2D carriers based on the acquired information.

### (Carrier conversion process)

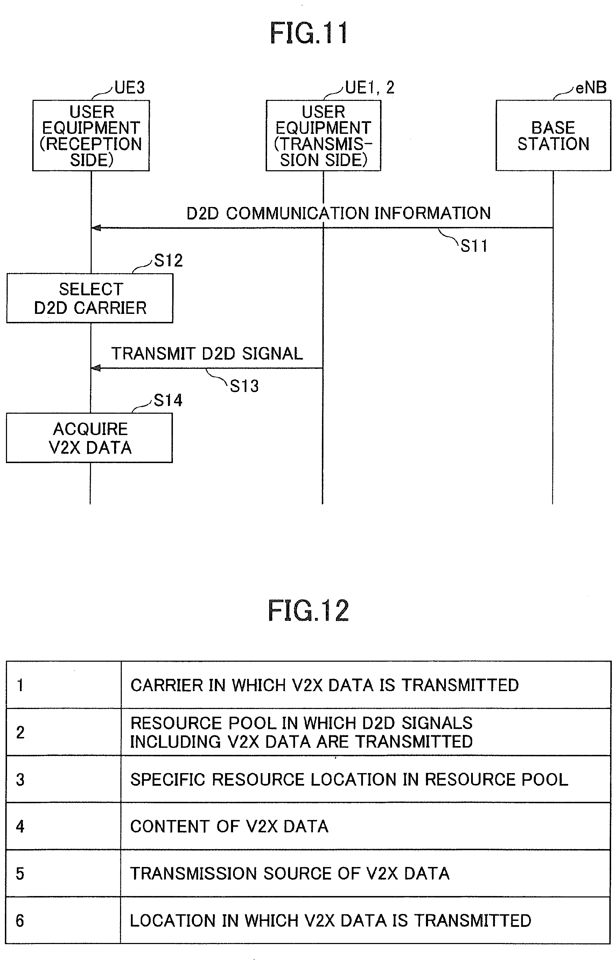

Fig. 11 is a sequence diagram illustrating an example of a processing procedure related to conversion of carriers according to the first embodiment. In the present embodiment, the base station eNB operates to detect which D2D communication (V2X communication) is performed in each D2D carrier in advance, which will be described in detail later. In the example of Fig. 11, it is assumed that the transmission-side user equipment UE1 or UE2 is scheduled to transmit V2X data and the base station eNB has detected this in advance. Although the V2X data may be any information, the V2X data is data used in a predetermined V2X service, such as congestion information, for example.

The base station eNB generates D2D communication information based on the content of D2D communication performed in each D2D carrier, which is detected by itself, and transmits the generated D2D communication information to the user equipment UE3 via the cellular carrier (S11). A specific transmission method will be described later. The D2D communication information includes information indicating that V2X data is transmitted in carrier 2, for example.

Subsequently, the user equipment UE selects a D2D carrier to be monitored based on the D2D communication information acquired via the cellular carrier (S12). Since the D2D communication information includes information indicating that V2X data is transmitted in carrier 2, the user equipment UE3 selects D2D carrier 2 as the D2D carrier to be monitored. Subsequently, the transmission-side user equipment UE1 or UE2 transmits a D2D signal in D2D carrier 2 (S13). The reception-side user equipment UE3 receives the D2D signal transmitted from the user equipment UE1 or UE2 by monitoring D2D carrier 2 selected in step S12 and acquires the V2X data included in the D2D signal (S14).

### (D2D communication information)

Next, information included in the D2D communication information will be described in detail with reference to Fig. 12. The D2D communication information includes at least "1. Carrier in which V2X data is transmitted" (for example, a carrier index). In addition to this, the D2D communication information may further include "2. Resource pool in which D2D signals including V2X data are transmitted" (for example, a resource pool index) as information indicating more detail radio resources and may further include "3. Specific resource location in resource pool" (for example, a subframe number, a bitmap indicating subframes, or the like). Moreover, instead of (or in addition to) "2. Resource pool in which D2D signals including V2X data are transmitted" and "3. Specific resource location in resource pool," information indicating "allocated time/frequency resources for transmitting V2X data in the carrier" may be included.

The D2D communication information may further include "4. Content of V2X data" (a V2X service name, a V2X service type, an ID for identifying V2X service, or the like), "5. Transmission source of V2X data" (for example, an ID of a user equipment UE that transmits V2X data, G-RNTI (Group-Radio Network Temporary Identity) to be described later, or the like), or/and "6. Location in which V2X data is transmitted" as the information on the content of V2X data.

The D2D communication information may include a plurality of items of information as a list. For example, a list of pairs of "1. Carrier in which V2X data is transmitted" and "4. Content of V2X data" may be repeatedly stored in the D2D communication information. In this way, the user equipment UE can detect information that wide-area congestion information is transmitted in D2D carrier 1 and a detailed congestion state near intersections is transmitted in D2D carrier 2. Moreover, the user equipment UE can perform an operation to select D2D carrier 1 when it is desired to receive wide-area congestion information and to select D2D carrier 2 when it is desired to receive detailed congestion information near intersections.

### (Transmission of D2D communication information)

In a processing procedure of step S11 in Fig. 11, the base station eNB may transmit (distribute) D2D communication information to the user equipment UE using notification information (SIB) and may transmit (distribute) the same to the user equipment UE using (E)PDCCH. When the D2D communication information is transmitted (distributed) using (E)PDCCH, the base station eNB stores DCI including the D2D communication information in a common search space and masks the CRC of the DCI using the RNTI (for example, G-RNTI) set in common to respective user equipments UEs (user equipments UEs that perform V2X communication). By masking the CRC using the RNTI set in common, a plurality of user equipments UEs which has detected the RNTI can receive the D2D communication information simultaneously. Moreover, when the DCI including the D2D communication information is stored in the common search space, the user equipment UE can acquire the D2D communication information in an RRC Idle state.

Moreover, the base station eNB may change the granularity of information included in the D2D communication information when the D2D communication information is transmitted in the notification information from that when the D2D communication information is transmitted in the (E)PDCCH. For example, when the D2D communication information is transmitted in the notification information, the D2D communication information may include "1. Carrier in which V2X data is transmitted," "2. Resource pool in which D2D signals including V2X data are transmitted," and "4. Content of V2X data" only. When the D2D communication information is transmitted in the (E)PDCCH, the cellular communication function may include "1. Carrier in which V2X data is transmitted," "2. Resource pool in which D2D signals including V2X data are transmitted," "3. Detailed resource location in resource pool," and "4. Content of V2X data".

The D2D communication information may be transmitted to the user equipment UE via higher-layer user equipment UE individual signaling (for example, a RRC signaling or a NAS message generated by a switch MME). Since the RRC signaling or the NAS message is a message transmitted by the individual user equipment UE and is not a message which is highly frequently transmitted like notification information or (E)PDCCH, the D2D communication information may include "1. Carrier in which V2X data is transmitted" and "4. Content of V2X data" only illustrated in Fig. 12, for example. When the D2D communication information is transmitted by the individual user equipment UE like the RRC signaling or the NAS message, a service identifier or a transmission source ID that the user equipment UE wants to receive may be reported to the base station eNB or a network. In this way, reception carriers can be converted for optimization to the state of the user equipment UE.

When the wireless communication system according to the present embodiment has a plurality of cellular carriers, the cellular carrier that transmits D2D communication information may be set in advance to the user equipment UE from the base station eNB using notification information (SIB) or RRC signaling and may be preconfigured in the user equipment UE by a SIM (Subscriber Identity Module), a core network, or the like.

### (Understanding of D2D communication performed in each D2D carrier)

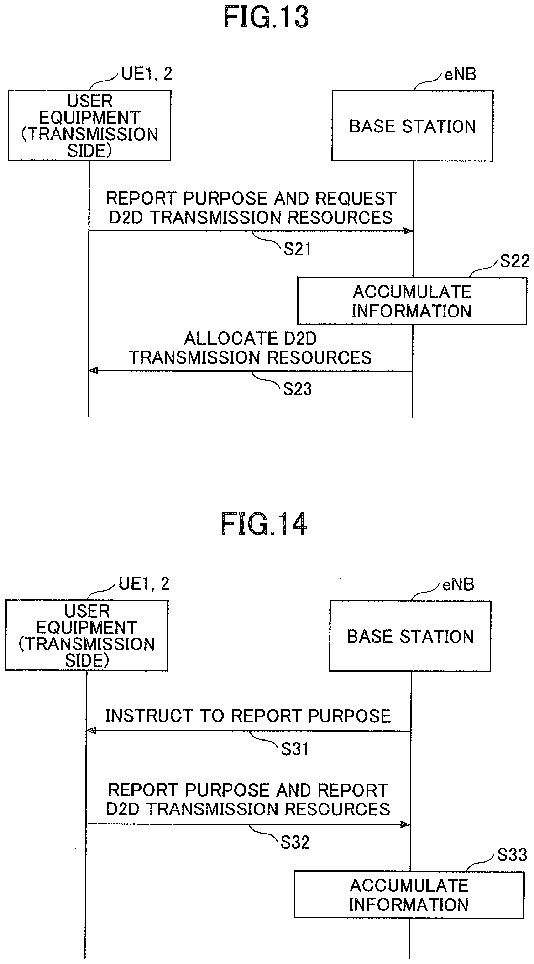

The base station eNB needs to detect in advance which D2D communication (V2X communication) is performed in each D2D carrier in order to transmit D2D communication information to the user equipment UE. Therefore, the base station eNB may detect which D2D communication (V2X communication) is performed in each D2D carrier according to a method illustrated in Fig. 13 or Fig. 14.

Fig. 13 is a sequence diagram illustrating a first example of a processing procedure when a base station collects information on D2D communication. The transmission-side user equipment UE1 or UE2 obtains radio resources to be used for transmitting D2D signals to the base station eNB when performing V2X communication (S21). In this case, the transmission-side user equipment UE1 or UE2 may notify the base station eNB of "information (for example, "4. Content of V2X data" described above) indicating the purpose of transmitting D2D signals". The transmission-side user equipment UE1 or UE2 may also notify the base station eNB of the current position thereof. Subsequently, the base station eNB accumulates "information indicating the purpose of transmitting D2D signals" notified from the transmission-side user equipment UE1 or UE2 (S22). Subsequently, the base station eNB allocates radio resources to be used for transmitting D2D signals and notifies the allocated radio resources to the transmission-side user equipment UE1 or UE2 (S23).

Fig. 14 is a sequence diagram illustrating a second example of a processing procedure when a base station collects information on D2D communication. When transmitting D2D signals, the base station eNB instructs the transmission-side user equipment UE to report "Information indicating the purpose of transmitting D2D signals" or/and "Radio resources to be used for transmitting D2D signals (for example, "1. Carrier in which V2X data is transmitted," "2. Resource pool in which D2D signals including V2X data are transmitted" or/and "3. Specific resource location in resource pool")" to the base station eNB (S31). The base station eNB may send the instruction to the user equipment UE using notification information or RRC signaling. It may be determined in advance as standard specifications that the processing procedure of step S32 is to be performed. In this case, the processing procedure of step S31 may be omitted.

Subsequently, when performing V2X communication, the transmission-side user equipment UE1 or UE2 reports "Information indicating the purpose of transmitting D2D signals" or/and "Radio resources to be used for transmitting D2D signals" to the base station eNB (S32). The transmission-side user equipment UE1 or UE2 may also notify the current position thereof to the base station eNB. The base station eNB accumulates "Information indicating the purpose of transmitting D2D signals" or/and "Radio resources to be used for transmitting D2D signals" notified from the user equipment UE (S33).

### (Modification of carrier conversion process)

In the processing procedure described with reference to Fig. 11, the reception-side user equipment UE3 selects D2D carriers based on the D2D communication information acquired from the base station eNB. However, instead of this, the reception-side user equipment UE may detect radio resources to be used for transmitting D2D signals by itself and select the D2D carrier based on the detected radio resources.

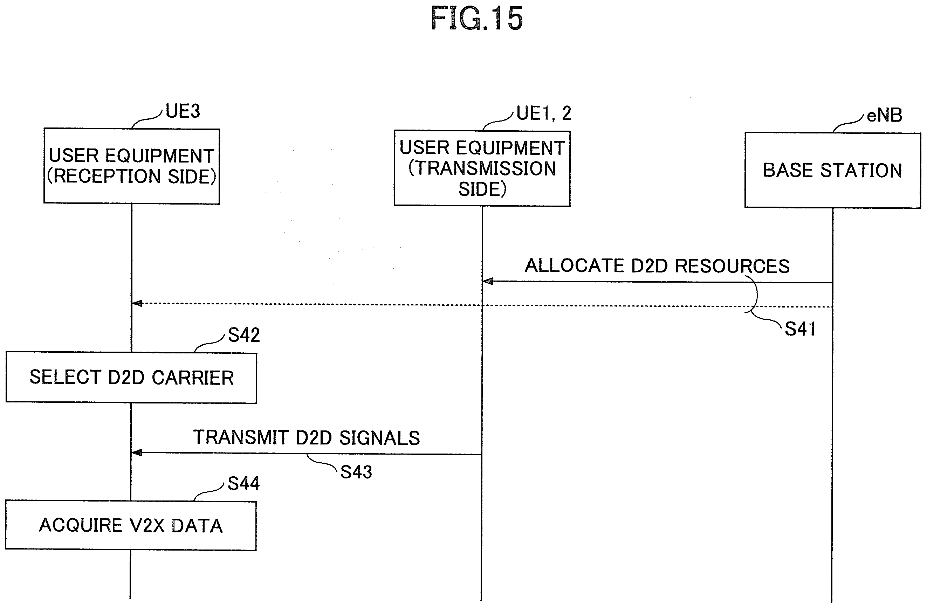

Fig. 15 is a sequence diagram illustrating a modification of a processing procedure related to conversion of carriers according to the first embodiment. In Fig. 15, it is assumed that the user equipments UE1 to UE3 have detected the RNTI set in common to the respective user equipments UEs (the user equipments UEs that perform V2X communication).

First, the base station eNB allocates radio resources of arbitrary D2D carrier (in this example, D2D carrier 2) to the user equipment UE1 or UE2 and notifies information indicating the allocated D2D carrier and the allocated radio resources to the transmission-side user equipment UE1 or UE2 in (E)PDCCH of the cellular carrier (S41). In this case, the base station eNB stores the DCI including the information indicating the allocated D2D carrier and the allocated radio resources in the common search space and masks the CRC of the DCI using the RNTI (for example, G-RNTI) set in common to the respective user equipments UEs (the user equipments UEs that perform V2X communication). Furthermore, the DCI may include an ID (for example, the C-RNTI of the user equipment UE1 or UE2) that designates a user equipment UE to which radio resources are allocated.

Here, since the reception-side user equipment UE3 has detected the RNTI set in common to the respective user equipments UEs, the reception-side user equipment UE3 can acquire the DCI transmitted from the base station eNB to the transmission-side user equipment UE1 or UE2 by monitoring the common search space. In this way, the user equipment UE3 can detect that the D2D signals are transmitted in D2D carrier 2.

Subsequently, the reception-side user equipment UE3 selects D2D carrier 2 included in the DCI received in step S41 (S42), receives the D2D signals transmitted from the user equipment UE1 or UE2 in D2D carrier 2 by monitoring the selected D2D carrier 2, and acquires the V2X data (S43, S44).

In Fig. 15, the base station eNB may notify the information indicating the configuration of the resource pools in respective D2D carriers in advance using the notification information of the cellular carrier and may notify the information indicating the specific radio resources in the resource pool to the user equipment UE1 or UE2 in the processing procedure of step S41.

Hereinabove, the first embodiment has been described. According to the first embodiment, the user equipment UE can select a D2D carrier in which V2X data that the user equipment UE wants to receive is transmitted and receive D2D signals.

### <Second embodiment>

### (Overview)

In the first embodiment, the reception-side user equipment UE is allowed to select a D2D carrier to be monitored by itself by notifying the D2D communication information from the base station eNB to the user equipment UE. On the other hand, in the second embodiment, the base station eNB sets a non-monitoring period to at least one carrier among a plurality of carriers set in the wireless communication system with respect to the reception-side user equipment UE and notifies the period to the user equipment UE. Moreover, in the notified non-monitoring period, the reception-side user equipment UE operates to select carriers other than a carrier in which the period is set and monitor the carriers. Hereinafter, a plurality of variations of a carrier in which the non-monitoring period is set and a setting method will be described.

### (DRX set in D2D carrier)

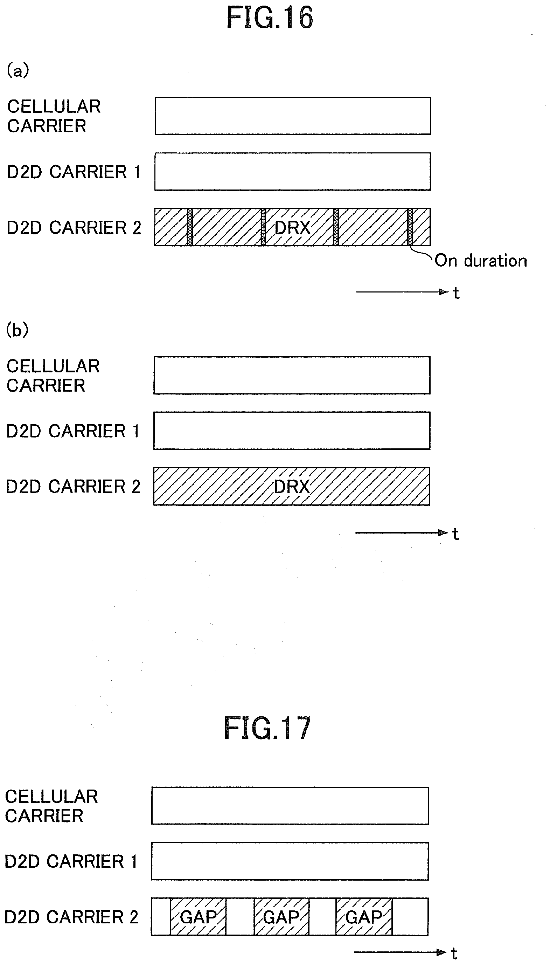

Figs. 16(a) and 16(b) are diagrams illustrating a case in which a DRX (Discontinuous Reception) period is set in a D2D carrier as a non-monitoring period in which the user equipment UE does not need to perform monitoring. As illustrated in Fig. 16(a), the user equipment UE operates to monitor D2D carrier 2 in which the DRX period is set in an On-duration period only and operates to monitor D2D carrier 1 in a period other than the On-duration period as long as the DRX period is cancelled. When the DRX period is cancelled, the user equipment UE operates to monitor D2D carrier 2 instead of D2D carrier 1.

When the control information (SCI) of D2D transmitted from another user equipment UE is received as a result of monitoring D2D carrier 2 in the On-duration period, the user equipment UE may cancel the DRX period and continuously monitor D2D carrier 2 to receive D2D signals (the data corresponding to the control information).

The user equipment UE may measure the reception power level (RSRP: Receiving Signal Receiving Power) of D2D carrier 2 in the On-duration period and cancel the DRX period to monitor D2D carrier 2 when the measured reception power level exceeds a predetermined threshold. When the reception power level is larger than the predetermined threshold, since it is expected that D2D communication is frequently performed in D2D carrier 2, the user equipment UE can increase the probability to acquire desired V2X data by actively monitoring the D2D signals transmitted in D2D carrier 2.

As another example, as illustrated in Fig. 16(b), the user equipment UE may operate to monitor basically D2D carrier 1 and cancel the DRX period based on signaling received in the cellular carrier. For example, the user equipment UE may operate to cancel the DRX period to monitor carrier 2 when the user equipment UE receives the DCI including the information indicating that D2D signals are transmitted in D2D carrier 2 in the (E)PDCCH of the cellular carrier.

### (GAP period set in D2D carrier)

Fig. 17 is a diagram illustrating a case in which a GAP period to the D2D carrier as a period in which the user equipment UE does not need to perform monitoring. The user equipment UE operates to monitor D2D carrier 1 in the GAP period and operates to select any one of D2D carrier 1 and D2D carrier 2 to monitor the selected D2D carrier in a period other than the GAP period.

The base station eNB may forcibly cancel the GAP period. For example, the base station eNB may notify the user equipment UE of cancellation (inactivation) and resetting (activation) of the GAP period using the (E)PDCCH of the cellular carrier. In this way, for example, when the base station eNB had detected that V2X data is transmitted in the GAP period of D2D carrier 2 (for example, when the base station eNB is requested to allocate resources of D2D carrier 2 from the transmission-side user equipment UE), the base station eNB can perform an operation of temporarily cancelling the GAP period and causing the reception-side user equipment UE to acquire the V2X data.

The base station eNB may store the DCI including the information on cancellation and resetting of the GAP period in the common search space of the (E)PDCCH of the cellular carrier and mask the CRC of the DCI using the RNTI (for example, G-RNTI) set in common to the respective user equipments UEs (the user equipments UEs that perform V2X communication). Moreover, a plurality of GAP periods may be set so that the plurality of GAP periods are correlated with a plurality of G-RNTIs. In this case, each of the plurality of G-RNTIs may be correlated with a specific V2X service or a specific resource pool, for example. In this way, it is possible to allow a user equipment UE which has detected a specific G-RNTI only to acquire the V2X data by temporarily cancelling the GAP period.

### (DRX set in cellular carrier)

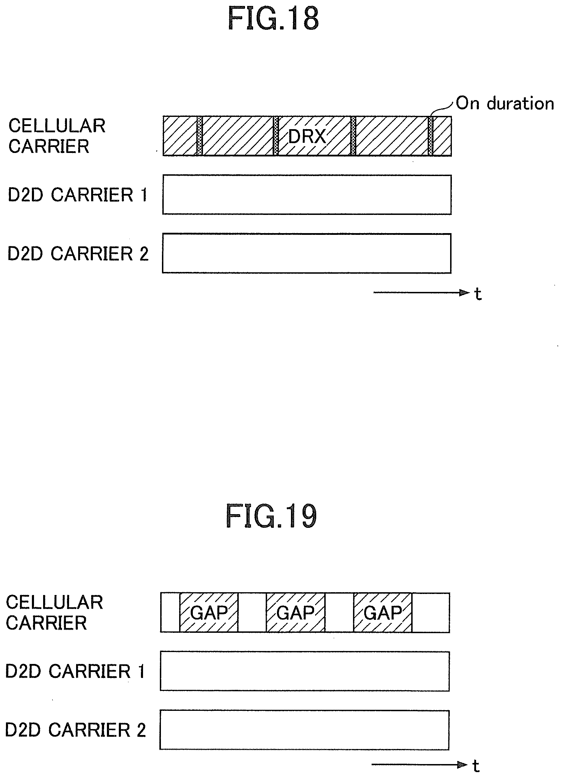

Fig. 18 is a diagram illustrating a case in which DRX is set in a cellular carrier. The user equipment UE may operate to monitor the cellular carrier in an On-duration period only and operate to monitor D2D carrier 1 and D2D carrier 2 in a period other than the On-duration period without monitoring the cellular carrier unless the DRX period is cancelled. When the DRX period is cancelled, the user equipment UE operates to select any one of D2D carrier 1 and D2D carrier 2 to monitor the selected D2D carrier.

In the example of Fig. 18, the user equipment UE operates to cancel the DRX period when the user equipment UE receives the DCI (DL assignment or UL grant) indicating that data dedicated for the user equipment UE is transmitted in the cellular carrier as a result of monitoring the cellular carrier in the On-duration period (that is, a DRX cancellation condition defined in the conventional LTE is satisfied).

The user equipment UE may cancel the DRX period may cancel the DRX period when the user equipment UE receives DCI (for example, the DCI of the CRC masked by the RNTI set in common to the respective user equipments UEs) including the information indicating that D2D signals are transmitted in D2D carrier 1 or D2D carrier 2 in the (E)PDCCH of the cellular carrier.

### (GAP period set in cellular carrier)

Fig. 19 is a diagram illustrating a case in which the GAP period is set in the cellular carrier as a period in which the user equipment UE does not need to perform monitoring. The user equipment UE operates to monitor D2D carrier 1 and D2D carrier 2 in the GAP period and operates to select any one of D2D carrier 1 and D2D carrier 2 and monitor the selected D2D carrier in a period other than the GAP period.

The base station eNB may notify the user equipment UE of cancellation (inactivation) and resetting (activation) of the GAP period using the (E)PDCCH of the cellular carrier in a period other than the GAP period. In this way, for example, the base station eNB can cancel the GAP period to instruct the user equipment UE to monitor the cellular carrier when it is desired to perform cellular communication frequently in a cellular carrier or D2D communication is permitted in the cellular carrier as necessary.

When D2D communication is permitted in the cellular carrier, the base station eNB may store the DCI including the information on cancellation and resetting the GAP period in the common search space of the (E)PDCCH of the cellular carrier and mask the CRC of the DCI using the RNTI (for example, G-RNTI) set in common to respective user equipments UEs (the user equipments UEs that perform V2X communication). Moreover, a plurality of GAP periods may be set so that the plurality of GAP periods are correlated with a plurality of G-RNTIs. In this case, each of the plurality of G-RNTIs may be correlated with a specific V2X service or a specific resource pool of the cellular carrier, for example. In this way, it is possible to allow a user equipment UE which has detected a specific G-RNTI only to acquire the V2X data in the cellular carrier by temporarily cancelling the GAP period.

### (Notification of DRX period or GAP period)

The base station eNB may notify "D2D carrier in which the DRX period is set," "information indicating the DRX period and the On-duration period," or "D2D carrier in which GAP period is set" and "information indicating the GAP period" to the respective user equipments UEs using the notification information (SIB) of the cellular carrier.

Moreover, the base station eNB may store the DCI including these items of information in the common search space of the (E)PDCCH of the cellular carrier and mask the CRC of the DCI using the RNTI (for example, G-RNTI) set in common to the respective user equipments UEs (the user equipments UEs that perform V2X communication). In this case, the RNTI set in common to the respective user equipments UEs (the user equipments UEs that perform V2X communication) may be correlated with a specific V2X service. In this way, a user equipment UE that supports a specific V2X service only can acquire "D2D carrier in which the DRX period is set," "information indicating the DRX period and the On-duration period," or "D2D carrier in which GAP period is set" and "information indicating the GAP period".

### (Units of setting DRX period or GAP period)

The DRX period or the GAP period set in the D2D carrier may be correlated with a specific resource pool and may be correlated with a specific V2X service. In this way, for example, a user equipment UE that does not support a specific V2X service (that does not need to receive D2D signals of the specific V2X service) can operate to monitor another D2D carrier in the DRX period or the GAP period correlated with the specific V2X service.

### (Operation example which uses second embodiment)

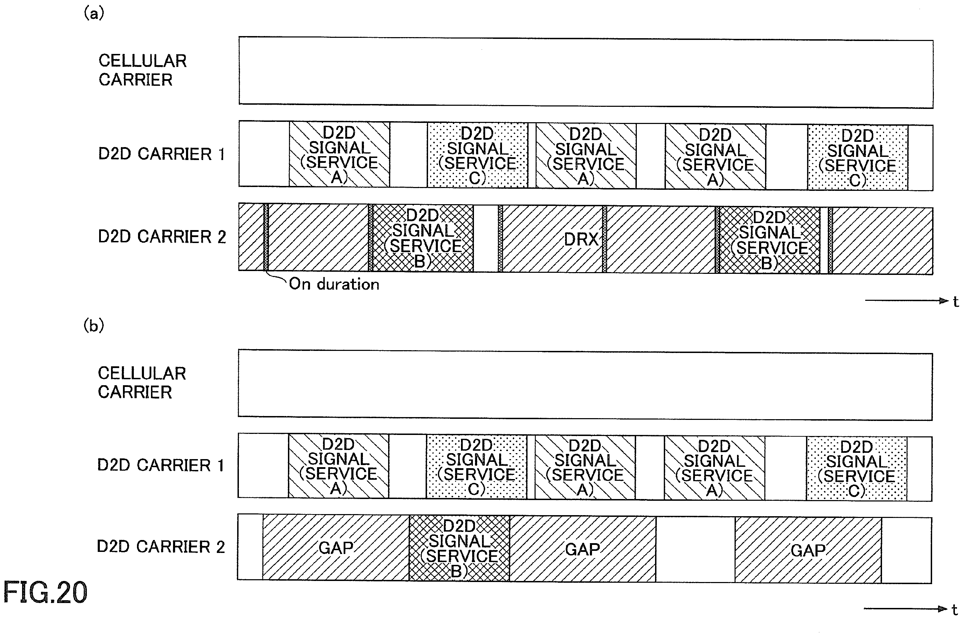

Here, an operation example which uses the second embodiment will be described with reference to Figs. 20(a) and 20(b). For example, an operation form in which D2D signals of each V2X service are transmitted using D2D carrier 1 mainly and D2D signals are transmitted using D2D carrier 2 relatively less frequently will be considered.

First, as illustrated in Fig. 20(a), a case in which DRX is set in D2D carrier 2 will be considered. In this way, the user equipment UE can acquire data of a larger number of V2X services since the user equipment UE operates to monitor D2D carrier 1 mainly.

When the transmission-side user equipment UE tries to transmit D2D signals related to service B using D2D carrier 2, the transmission-side user equipment UE preferably transmits a control signal (SCI) in the On-duration period rather than transmitting D2D signals at an arbitrary timing. By doing so, a user equipment UE that wants to receive D2D signals of service B can switch from D2D carrier 1 to D2D carrier 2 and monitor the D2D carrier.

Next, as illustrated in Fig. 20(b), a case in which the GAP period is set in D2D carrier 2 may be considered. In this way, the user equipment UE can acquire data of a larger number of V2X services since the user equipment UE operates to monitor D2D carrier 1 in a period other than the GAP period.

When the transmission-side user equipment UE tries to transmit D2D signals related to service B in D2D carrier 2, the transmission-side user equipment UE preferably transmits D2D signals in a period other than the GAP period rather than transmitting D2D signals at an arbitrary timing. In this way, the possibility that the D2D signals arrive in the user equipment UE that wants to receive the D2D signals of service B.

A service, a user equipment UE, a target area, and the like that can transmit D2D signals may be notified for each group of resource pools or subframes using notification information or higher-layer signaling (for example, RRC signaling or a NAS message). In this way, a reception-side user equipment UE can autonomously limit a monitoring target carrier and select a reception carrier efficiently by combining the monitoring target carrier with the DRX period or the GAP period from the base station eNB.

Hereinabove, the second embodiment has been described. According to the second embodiment, since the user equipment UE can select carriers other than a carrier that does not need to be monitored to monitor the selected carriers, the user equipment UE can receive D2D signals in which V2X data that the user equipment UE wants to receive is transmitted.

### <Supplementary explanation of first and second embodiments>

In the first and second embodiments, the user equipment UE may measure a plurality of carriers simultaneously and detect the power levels to thereby autonomously detect whether D2D signals are actually transmitted in the respective carriers. Even when a user equipment UE includes a limited number of receivers, the user equipment UE can performs such an operation as long as the user equipment UE has the capability to detect the power levels of a number of carriers and can perform the power detection operation independently from the operation of receiving D2D signals described in the first and second embodiments. By combining such a power detection operation with the first and second embodiments, it is possible to switch carriers efficiently. The user equipment UE may report the terminal capability to the base station eNB so that the base station eNB can detect such terminal capability to optimize the operation in the first and second embodiments. Examples of the reported terminal capability include a power detection capability in a plurality of carriers, a combination of carriers (bands) in which power can be detected, a combination of carriers (bands) in which in which power can be detected and D2D signals can be transmitted and carriers (bands) in which power can be detected, and a total number of carriers (bandwidth) in which power can be detected. A time resource in which power detection is performed may be arbitrarily determined by the user equipment UE and may be a predetermined time resource determined among resource pools or subframes.

### <Functional configuration>

A functional configuration example of the user equipment UE and the base station eNB that execute the operation of the plurality of embodiments described above will be described. The user equipment UE and the base station eNB may include all functions of the schemes according to the first and second embodiments and may include the functions of the scheme of any one of the embodiments only. Moreover, the scheme to be executed may be switched according to configuration information.

### (User equipment)

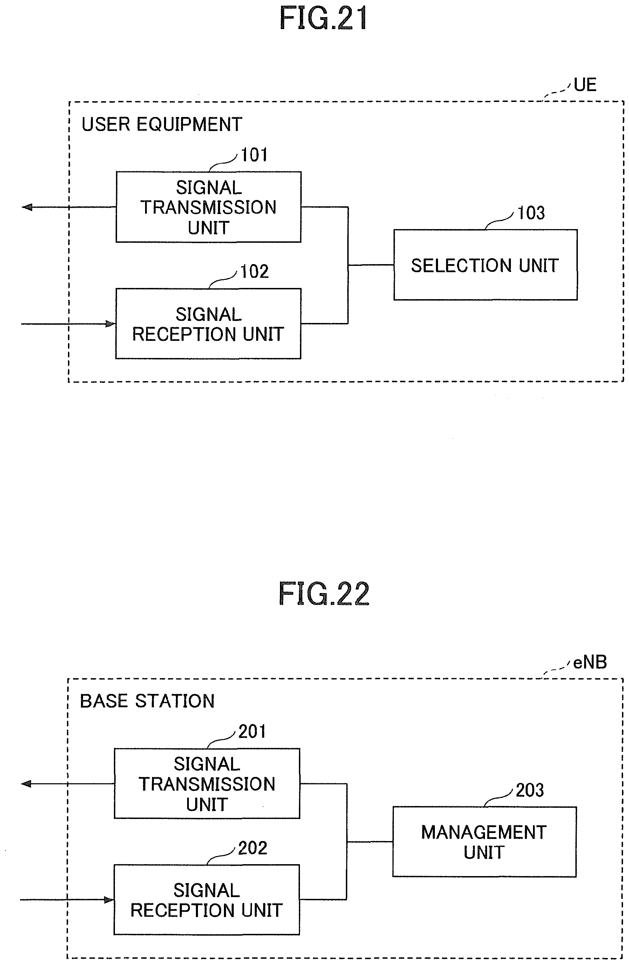

Fig. 21 is a diagram illustrating an example of a functional configuration of a user equipment according to the embodiment. As illustrated in Fig. 21, the user equipment UE includes a signal transmission unit 101, a signal reception unit 102, and a selection unit 103. Fig. 21 illustrates functional units of the user equipment UE particularly related to the embodiment only and also includes at least functions (not illustrated) for performing operations compatible with LTE. Moreover, the functional configurations illustrated in Fig. 21 are examples only. The functional classifications and the names of the functional units are not particularly limited as long as the operations according to the present embodiment can be executed.

The signal transmission unit 101 includes a function of generating various signals of the physical layer from higher-layer signals to be transmitted from the user equipment UE and transmitting the signals wirelessly. Moreover, the signal transmission unit 101 has a D2D signal transmission function and a cellular communication transmission function. Furthermore, the signal transmission unit 101 has a function of performing D2D communication or cellular communication simultaneously using a plurality of carriers. The signal transmission unit 101 may include a plurality of transmission units (for example, a first transmission unit and a second transmission unit).

The signal reception unit 102 includes a function of wirelessly receiving various signals from the other user equipment UE or the base station eNB and acquiring higher-layer signals from the received physical layer signals. Moreover, the signal reception unit 102 has a D2D signal receiving function and a cellular communication receiving function. Furthermore, the signal reception unit 102 has a function of performing D2D communication or cellular communication simultaneously using a plurality of carriers. The signal reception unit 102 may include a plurality of reception units (for example, a first reception unit and a second reception unit).

The signal reception unit 102 has a function of receiving information (D2D communication information) on communication performed in each of a plurality of carriers. Moreover, the signal reception unit 102 has a function of receiving information indicating a predetermined period (for example, a DRX period, an On-duration period, or a GAP period) in a time direction set in a specific carrier among a plurality of carriers.

The signal reception unit 102 may monitor whether control information is transmitted in a specific carrier in a period (for example, the On-duration period) in which a specific carrier is to be monitored or may monitor whether the reception power level in the specific carrier is equal to or higher than a predetermined threshold.

The selection unit 103 selects a carrier in which the signal reception unit 102 has to receive signals and instructs the signal reception unit 102 to perform a receiving operation in the selected carrier. Moreover, the selection unit 103 selects a carrier in which the signal transmission unit 101 has to transmit signals and instructs the signal transmission unit 101 to perform a transmitting operation in the selected carrier.

The selection unit 103 may select a carrier in which the selection unit 103 has to receive signals among a plurality of carriers based on information (D2D communication information) on communication performed in each of a plurality of carriers. Moreover, the selection unit 103 may select a carrier other than a specific carrier in which a predetermined period in the time direction is set among a plurality of carriers in the predetermined period (for example, the DRX period, the On-duration period, or the GAP period) in the time direction.

When the signal reception unit 102 determines that control information (for example, SCI) is transmitted in a specific carrier or the reception power level in the specific carrier is equal to or higher than a predetermined threshold, the selection unit 103 may instruct the signal reception unit 102 to receive predetermined communication in the specific carrier instead of a carrier other than the specific carrier in which a specific period (for example, the On-duration period) in the time direction is set.

### (Base station)

Fig. 22 is a diagram illustrating an example of a functional configuration of a base station according to the embodiment. As illustrated in Fig. 22, the base station eNB includes a signal transmission unit 201, a signal reception unit 202, and a management unit 203. Fig. 22 illustrates functional units of the base station eNB particularly related to the embodiment only and also includes at least functions (not illustrated) for performing operations compatible with LTE. Moreover, the functional configurations illustrated in Fig. 22 are examples only. The functional classifications and the names of the functional units are not particularly limited as long as the operations according to the present embodiment can be executed.

The signal transmission unit 201 includes a function of generating various signals of the physical layer from higher-layer signals to be transmitted from the base station eNB and transmitting the signals wirelessly. The signal reception unit 202 includes a function of wirelessly receiving various signals from the user equipment UE and acquiring higher-layer signals from the received physical layer signals.

The management unit 203 includes a function of detecting D2D communication performed in each D2D carrier, a function of allocating radio resources for D2D communication in each D2D carrier, and a function of notifying allocated radio resources to the user equipment UE via the signal transmission unit 201. Moreover, the management unit 203 includes a function of setting the DRX period (including the On-duration period) or the GAP period to each carrier and notifying the timings of the DRX period (including the On-duration period) or the GAP period set in each carrier to the user equipment UE via the signal transmission unit 205 as necessary.

All of the functional configurations of the base station eNB and the user equipment UE described above may be realized by a hardware circuit (for example, one or a plurality of IC chips), and portions thereof may be realized by a hardware circuit and the other may be realized by a CPU and a program.

### (User equipment)

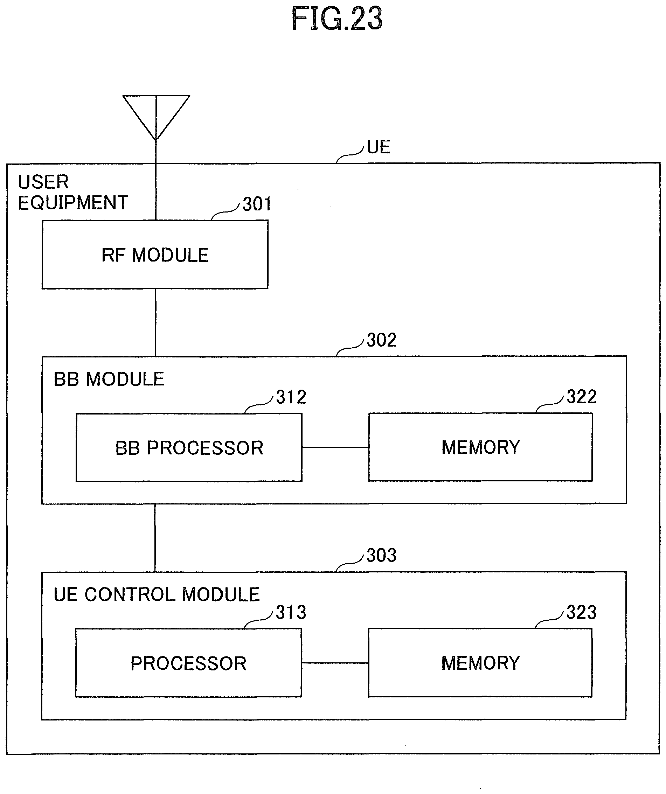

Fig. 23 is a diagram illustrating an example of a hardware configuration of the user equipment according to the embodiment. Fig. 23 illustrates a configuration more similar to an implementation example than Fig. 21. As illustrated in Fig. 23, the user equipment UE includes an RF (Radio Frequency) module 301 that performs processing on radio signals, a BB (Base Band) processing module 302 that performs baseband signal processing, and a UE control module 303 that performs processing of higher layers and the like.

The RF module 301 generates radio signals to be transmitted from an antenna by performing D/A (Digital-to-Analog) conversion, modulation, frequency conversion, power amplification, and the like on the digital baseband signals received from the BB processing module 302. Moreover, the RF module 301 generates digital baseband signals by performing frequency conversion, A/D (Analog to Digital) conversion, demodulation, and the like on the received radio signals and delivers the generated digital baseband signals to the BB processing module 302. The RF module 301 includes a portion of the signal transmission unit 101 and the signal reception unit 102 illustrated in Fig. 21, for example.

The BB processing module 302 performs a process of converting an IP packet and a digital baseband signal or vice versa. A DSP (Digital Signal Processor) 312 is a processor that performs signal processing in the BB processing module 302. A memory 322 is used as a work area of the DSP 312. The RF module 301 includes a portion of the signal transmission unit 101, a portion of the signal reception unit 102, and the selection unit 103 illustrated in Fig. 21, for example.

The UE control module 303 performs protocol processing of the IP layer and processing of various applications. A processor 313 is a processor that performs the processing performed by the UE control module 303. A memory 323 is used as a work area of the processor 313. The UE control module 303 includes a portion of the selection unit 103 illustrated in Fig. 21, for example.

### (Base station)

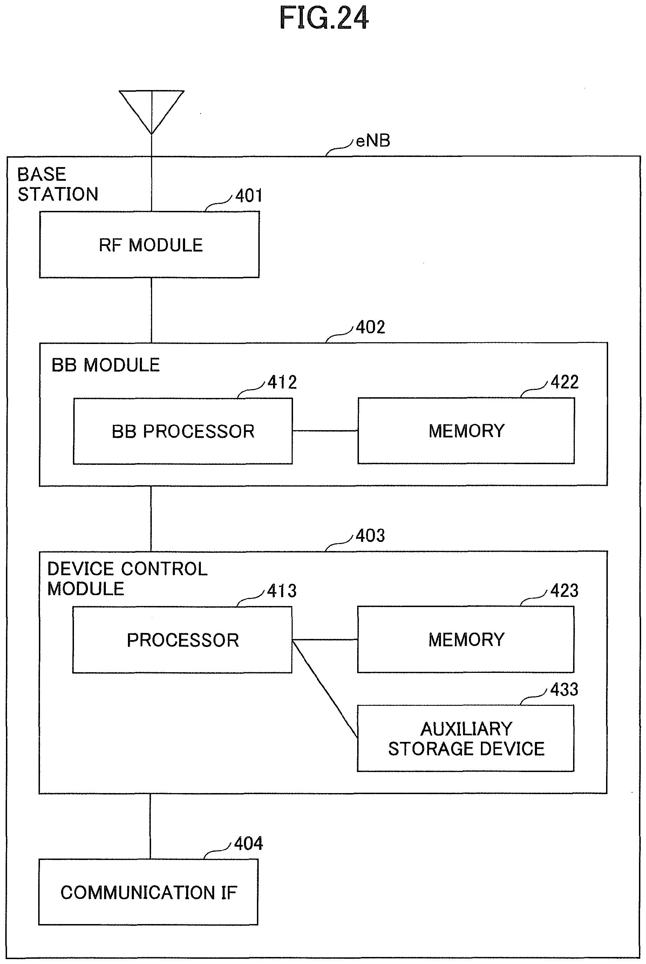

Fig. 24 is a diagram illustrating an example of a hardware configuration of a base station according to the embodiment. Fig. 24 illustrates a configuration more similar to an implementation example than Fig. 22. As illustrated in Fig. 22, the base station eNB includes an RF module 401 that performs processing on radio signals, a BB processing module 402 that performs baseband signal processing, a device control module 403 that performs processing of higher layers and the like, and a communication IF 404 which is an interface for connecting to a network.

The RF module 401 generates radio signals to be transmitted from an antenna by performing D/A conversion, modulation, frequency conversion, power amplification, and the like on the digital baseband signals received from the BB processing module 402. Moreover, the RF module 401 generates digital baseband signals by performing frequency conversion, A/D conversion, demodulation, and the like on the received radio signals and delivers the generated digital baseband signals to the BB processing module 402. The RF module 401 includes a portion of the signal reception unit 202 and the signal transmission unit 201 illustrated in Fig. 22, for example.

The BB processing module 402 performs a process of converting an IP packet and a digital baseband signal or vice versa. The DSP 412 is a processor that performs signal processing in the BB processing module 402. A memory 422 is used as a work area of the DSP 412. The BB processing module 402 includes a portion of the signal transmission unit 201, a portion of the signal reception unit 202, and a portion of the management unit 203 illustrated in Fig. 22, for example.

The device control module 403 performs protocol processing of the IP layer and OAM (Operation and Maintenance) processing. A processor 413 is a processor that performs the processing performed by the device control module 403. A memory 423 is used as a work area of the processor 413. An auxiliary storage device 433 is a HDD, for example, and stores various items of configuration information for the base station eNB itself to operate. The device control module 403 includes a portion of the management unit 203 illustrated in Fig. 22, for example.

### <Summary>

According to the embodiment, there is provided a user equipment in a wireless communication system in which communication is performed between a base station and a user equipment, including: a first reception unit that receives information on communication performed in each of a plurality of carriers from the base station; a selection unit that selects a carrier in which the user equipment has to receive signals among the plurality of carriers based on the information on communication performed in each of the plurality of carriers; and a second reception unit that receives predetermined communication in the carrier selected by the selection unit. In this way, a technique capable of appropriately converting carriers that a user equipment uses for communication is provided.

The first reception unit may receive the information on communication performed in each of the plurality of carriers via a carrier used in a downlink, and the plurality of carriers may be carriers used in D2D communication. In this way, the user equipment UE can acquire D2D communication information by monitoring cellular carriers used in cellular communication.

The information on communication performed in each of the plurality of carriers may include at least one of information indicating radio resources in which D2D signals are transmitted in each of the plurality of carriers, information on a terminal that transmits the D2D signals, and information indicating a service corresponding to the D2D signals. In this way, the D2D communication information can store various items of information on D2D communication, and for example, the user equipment UE can perform an operation of monitoring a specific carrier corresponding to a specific service that the user equipment UE wants to receive. Due to this, a user equipment UE that does not have the capability to receive all carriers simultaneously can acquire data related to a V2X service that the user equipment UE wants to receive.

The information on communication performed in each of the plurality of carriers may be included in downlink control information, a RRC message, or a NAS message. In this way, the user equipment UE can acquire D2D communication information using various methods.

According to the embodiment, there is provided a user equipment in a wireless communication system in which communication is performed between a base station and a user equipment, including: a first reception unit that receives information indicating a predetermined period in a time direction set in a specific carrier among a plurality of carriers from the base station; a selection unit that selects a carrier other than the specific carrier in which the predetermined period in the time direction is set among the plurality of carriers in the predetermined period in the time direction among the plurality of carriers; and a second reception unit that receives predetermined communication in the carrier selected by the selection unit. In this way, a technique capable of appropriately converting carriers that a user equipment uses for communication is provided.

The first reception unit may receive information indicating a predetermined period in the time direction set in the specific carrier among the plurality of carriers via a carrier used in a downlink, and the specific carrier may be a carrier used in D2D communication. In this way, the user equipment UE can acquire D2D communication information by monitoring a cellular carrier used for cellular communication.

The information indicating the predetermined period in the time direction set in the specific carrier may include information indicating a period in which the specific carrier is to be monitored at a predetermined period, the second reception unit may monitor whether control information is transmitted in the specific carrier in the period in which the specific carrier is to be monitored or monitor whether a reception power level in the specific carrier is equal to or higher than a predetermined threshold, and when the second reception unit determines that the control information is transmitted in the specific carrier or the reception power level in the specific carrier is equal to or higher than the predetermined threshold, the selection unit may instruct the second reception unit to receive the predetermined communication in the specific carrier instead of the carrier other than the specific carrier to which the predetermined period in the time direction is set. In this way, the user equipment UE can detect that D2D signals are transmitted in a D2D carrier to which DRX is set and can receive D2D signals (V2X data) transmitted in the specific carrier by cancelling the DRX state.

According to the embodiment, there is provided a reception method executed by a user equipment in a wireless communication system in which communication is performed between a base station and a user equipment, including: receiving information on communication performed in each of a plurality of carriers from the base station; selecting a carrier in which the user equipment has to receive signals among the plurality of carriers based on the information on communication performed in each of the plurality of carriers; and receiving predetermined communication in the selected carrier. Due to this reception method, a technique capable of appropriately converting carriers that a user equipment uses for communication is provided.

According to the embodiment, there is provided a reception method executed by a user equipment in a wireless communication system in which communication is performed between a base station and a user equipment, including: receiving information indicating a predetermined period in a time direction set in a specific carrier among a plurality of carriers from the base station; selecting a carrier other than the specific carrier in which the predetermined period in the time direction is set among the plurality of carriers in the predetermined period in the time direction among the plurality of carriers; and receiving predetermined communication in the selected carrier. Due to this reception method, a technique capable of appropriately converting carriers that a user equipment uses for communication is provided.

### <Supplementary explanation according to embodiment>

The respective embodiments may be combined arbitrarily. That is, the first and second embodiments may be combined.

PSCCH may be another control channel as long as the control channel is a control channel for transmitting control information (SCI or the like) used in D2D communication. PSSCH may be another data channel as long as the data channel is a data channel for transmitting data (MAC PDU or the like) used in D2D communication. PSDCH may be another data channel as long as the data channel is a data channel for transmitting data (a discovery message or the like) used in D2D communication.

The configurations of the devices (the user equipment UE and the base station eNB) described in the embodiment may be realized when a program is executed by a CPU (a processor) in the device including the CPU and the memory. The configurations may be realized by hardware such as a hardware circuit that includes the logics of the processes described in the present embodiment and may be realized by a combination of a program and hardware.

While the embodiment of the present invention has been described, the disclosed invention is not limited to such an embodiment, and various variations, modifications, alterations, and substitutions could be conceived by those skilled in the art. While specific examples of numerical values are used in order to facilitate understanding of the invention, these numerical values are examples only and any other appropriate values may be used unless otherwise stated particularly. The classification of items in the description is not essential in the present invention, and features described in two or more items may be used in combination, and a feature described in a certain item may be applied to a feature described in another item (unless contradiction occurs). It is not always true that the boundaries of the functional units or the processing units in the functional block diagram correspond to boundaries of physical components. The operations of a plurality of functional units may be physically performed by a single component. Alternatively, the operations of the single functional unit may be physically performed by a plurality of components. The orders in the sequence and the flowchart described in the embodiment may be switched unless contradiction occurs. For convenience of explanation of processing, the user equipment UE and the base station eNB have been explained using functional block diagrams. However, these devices may be implemented by hardware, software, or a combination thereof. The software that operates by a processor included in the user equipment UE according to the embodiment of the present invention and the software that operates by a processor included in the base station eNB according to the embodiment of the present invention may be stored in a random access memory (RAM), a flash memory, a read only memory (ROM), an EPROM, an EEPROM, a register, a hard disk (HDD), a removable disk, a CD-ROM, a database, a server, and other appropriate storage media.

In the respective embodiments, the D2D communication information is an example of "information on communication performed in each of a plurality of carriers". The D2D communication is an example of predetermined communication.

"2. Resource pool in which D2D signals including V2X data are transmitted" and "3. Specific resource location in resource pool," or "3. Specific resource location in resource pool" is an example of "information indicating radio resources in which D2D signals are transmitted in each of a plurality of carriers". "5. Transmission source of V2X data" is an example of "information on terminal that transmits D2D signals". "4. Content of V2X data" is an example of "information indicating service corresponding to D2D signals". The DRX period or the GAP period is an example of "a predetermined period in a time direction set in a specific carrier". The On-duration period is an example of "a period in which a specific carrier is to be monitored at a predetermined period".

Information transmission (notification, reporting) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, an RRC message may be referred to as RRC signaling. Further, an RRC message may be, for example, an RRC connection setup message, an RRC connection reconfiguration message, or the like.

An aspect/embodiment described in the present specification may be applied to a system that uses LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), other appropriate systems, and/or a next generation system enhanced based thereon.

Determination or judgment may be performed according to a value (0 or 1) represented by a bit, may be performed according to a boolean value (true or false), or may be performed according to comparison of numerical values (e.g., comparison with a predetermined value).

It should be noted that the terms described in the present specification and/or terms necessary for understanding the present specification may be replaced by terms that have the same or similar meaning. For example, a channel and/or a symbol may be a signal. Further, a signal may be a message.

There is a case in which a UE may be referred to as a subscriber station, a mobile unit, subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

An aspect/embodiment described in the present specification may be used independently, may be used in combination, or may be used by switching according to operations. Further, transmission of predetermined information (e.g., transmission of "it is X") is not limited to explicitly-performed transmission. The transmission of predetermined information may be performed implicitly (e.g., explicit transmission of predetermined information is not performed).

As used herein, the term "determining" may encompasses a wide variety of actions. For example, "determining" may be regarded as calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining.

As used herein, the phrase "based on" does not mean, unless otherwise noted, "based on only". In other words, the phrase "base on" means both "based on only" and "based on at least".

Also, the order of processing steps, sequences or the like of an aspect/embodiment described in the present specification may be changed as long as there is no contradiction. For example, in a method described in the present specification, elements of various steps are presented in an exemplary order. The order is not limited to the presented specific order.

Input/output information, etc., may be stored in a specific place (e.g., memory) or may be stored in a management table. The input/output information, etc., may be overwritten, updated, or added. Output information, etc., may be deleted. Input information, etc., may be transmitted to another apparatus.

Transmission of predetermined information (e.g., transmission of "it is X") is not limited to explicitly-performed transmission. The transmission of predetermined information may be performed implicitly (e.g., explicit transmission of predetermined information is not performed).

Information, a signal, etc., described in the present specification may be represented by using any one of the various different techniques. For example, data, an instruction, a command, information, a signal, a bit, a symbol, a chip or the like described throughout in the present specification may be represented by voltage, current, electromagnetic waves, magnetic fields or a magnetic particle, optical fields or a photon, or any combination thereof.

The present invention is not limited to the above embodiments and various variations, modifications, alternatives, replacements, etc., may be included in the present invention without departing from the spirit of the invention.

The present application is based on and claims the benefit of priority of Japanese Priority Application No. 2016-020328 filed on February 4, 2016, the entire contents of which are hereby incorporated by reference.

### EXPLANATIONS OF LETTERS OR NUMERALS

- UE:: User equipment
- eNB:: Base station
- 101:: Signal transmission unit
- 102:: Signal reception unit
- 103:: Selection unit
- 201:: Signal transmission unit
- 202:: Signal reception unit
- 203:: Management unit
- 301:: RF module
- 302:: BB processing module
- 303:: UE control module
- 304:: Communication IF
- 401:: RF module
- 402:: BB processing module
- 403:: Device control module

## Claims

1. A user equipment in a wireless communication system in which communication is performed between a base station and the user equipment, the user equipment comprising:
a first reception unit that receives information on communication performed in each of a plurality of carriers from the base station;
a selection unit that selects a carrier in which the user equipment has to receive signals among the plurality of carriers based on the information on communication performed in each of the plurality of carriers; and
a second reception unit that receives predetermined communication in the carrier selected by the selection unit.

2. The user equipment according to claim 1, wherein
the first reception unit receives the information on communication performed in each of the plurality of carriers via a carrier used in a downlink, and
the plurality of carriers are carriers used in D2D communication.

3. The user equipment according to claim 2, wherein
the information on communication performed in each of the plurality of carriers includes at least one of information indicating radio resources in which D2D signals are transmitted in each of the plurality of carriers, information on a terminal that transmits the D2D signals, and information indicating a service corresponding to the D2D signals.

4. The user equipment according to claim 1 or 2, wherein
the information on communication performed in each of the plurality of carriers is included in downlink control information, a RRC message, or a NAS message.

5. A user equipment in a wireless communication system in which communication is performed between a base station and the user equipment, the user equipment comprising:
a first reception unit that receives information indicating a predetermined period in a time direction set in a specific carrier among a plurality of carriers from the base station;
a selection unit that selects a carrier other than the specific carrier in which the predetermined period in the time direction is set among the plurality of carriers in the predetermined period in the time direction among the plurality of carriers; and
a second reception unit that receives predetermined communication in the carrier selected by the selection unit.

6. The user equipment according to claim 5, wherein
the first reception unit receives information indicating a predetermined period in the time direction set in the specific carrier among the plurality of carriers via a carrier used in a downlink, and
the specific carrier is a carrier used in D2D communication.

7. The user equipment according to claim 6, wherein
the information indicating the predetermined period in the time direction set in the specific carrier includes information indicating a period in which the specific carrier is to be monitored at a predetermined period,
the second reception unit monitors whether control information is transmitted in the specific carrier in the period in which the specific carrier is to be monitored or monitors whether a reception power level in the specific carrier is equal to or higher than a predetermined threshold, and
when the second reception unit determines that the control information is transmitted in the specific carrier or the reception power level in the specific carrier is equal to or higher than the predetermined threshold, the selection unit instructs the second reception unit to receive the predetermined communication in the specific carrier instead of the carrier other than the specific carrier in which the predetermined period in the time direction is set.

8. A reception method executed by a user equipment in a wireless communication system in which communication is performed between a base station and the user equipment, the reception method comprising:
receiving information on communication performed in each of a plurality of carriers from the base station;
selecting a carrier in which the user equipment has to receive signals among the plurality of carriers based on the information on communication performed in each of the plurality of carriers; and
receiving predetermined communication in the selected carrier.

9. A reception method executed by a user equipment in a wireless communication system in which communication is performed between a base station and the user equipment, the reception method comprising:
receiving information indicating a predetermined period in a time direction set in a specific carrier among a plurality of carriers from the base station;
selecting a carrier other than the specific carrier in which the predetermined period in the time direction is set among the plurality of carriers in the predetermined period in the time direction among the plurality of carriers; and
receiving predetermined communication in the selected carrier.
